# EUROPÄISCHE PATENTSCHRIFT

(11) **EP 4 338 647 B1**
(45) Veröffentlichungstag und Bekanntmachung des Hinweises auf die Patenterteilung: **27.11.2024**
(21) Anmeldenummer: 23185462.1
(22) Anmeldetag: 14.07.2023
(51) Int. Cl.: A47L 9/00

(54) **WASCHEIMER**
WASH BUCKET
SEAU DE LAVAGE

(30) Priorität: 07.09.2022 DE 102022122736
(43) Veröffentlichungstag der Anmeldung: 20.03.2024
(73) Patentinhaber: Kronen-Hansa-Werk GmbH & Co. KG, 49393 Lohne (DE)
(72) Erfinder: Rottinghaus, Holger, 49393 Lohne (DE); KUPER, Klemens, 49413 Dinklage (DE); Nieuwenhuizen, Nico, 49377 Vechta (DE)
(74) Vertreter: Patentanwälte und Rechtsanwalt Weiß, Arat & Partner mbB

(56) Entgegenhaltungen:
- DE-U1- 20 314 142
- GB-A- 2 522 667
- US-A1- 2007 235 453

## Beschreibung

### Technisches Gebiet

Die Erfindung betrifft einen Wascheimer nach dem Oberbegriff des Anspruchs 1.

### Stand der Technik

Derartige Wascheimer sind bereits in vielfältiger Form und Ausgestaltung bekannt und gebräuchlich. So wird beispielsweise in der EP 2 606 802 B1 ein Wascheimer offenbart, welcher im Wesentlichen quaderförmig ausgebildet ist und an einer Außenkante eines Eimerbodens einen umlaufenden Steg aufweist der den Eimerboden von einer Aufstellfläche beabstandet und zugleich Aufnahmen für Rollen ausbildet. Weiterhin bildet der obere Rand des Eimers Ausgussöffnungen aus. Zudem sind auf dem Rand des Eimers Aufnahmen für Waschrollen aufgesetzt.

In diesem Zusammenhang ist auch die DE 10 2021 112 956 B3 anzuführen. Dort wird ein Eimer offenbart, welcher Aufnahmen für Waschrollen aufweist, die in die obere Kante der Eimerwandung eingelassen sind. Zudem verfügt der Eimer über eine Ausleermulde die sich über eine gesamte kürze Wandung erstreckt. Weiterhin ist am Eimerboden ein umlaufender Steg vorhanden, welcher den Eimerboden von einer Aufstellfläche beabstandet und zudem Aufnahmen für Rollenelemente bietet.

In der DE 201 00 665 U1 wird ein weiterer Wascheimer offenbart. Dieser weist einen schräggestellten Eimerboden auf. Ein keilförmig ausgebildetes Fußteil gleicht den schräggestellten Eimerboden aus, so dass der Eimer aufrecht und gerade auf einer ebenen Aufstellfläche stehen kann. Weiterhin ist eine zweite Stirnwand des Eimers kreisbogenförmig gekrümmt ausgebildet.

Weiter wird auf die GB 2 522 667 A hingewiesen, die 1. Einen Mop-Eimer, der - ein Mopp-Auswringmittel zum Auswringen eines Mopps aufweist, wobei mindestens ein Befestigungsmittel innerhalb des Mopp-Auswringmittels zum lösbaren Befestigen eines Stiels eines Reinigungswerkzeugs in einem aufrechten Zustand vorhanden ist, wobei ein Kopf des Reinigungswerkzeugs im Wesentlichen innerhalb des Mopp-Eimers enthalten ist und ein Kehrichtschalenstützmittel innerhalb des Mopp-Auswringmittels zum lösbaren Befestigen einer Kehrichtschale in einem im Wesentlichen aufrechten Zustand vorhanden ist.

Auch wird auf die DE 203 14 142 U1 hingewiesen, die einen Deckel für einen Kunststoffeimer offenbart, wobei ein drehbar gelagerter Henkel vorhanden ist, wobei der Kunststoffeimer Rollenhalterungen für eine den Kunststoffeimer überspannende Waschrolle aufweist und der Deckel formschlüssig mit dem Kunststoffeimer verbindbar ist und Ausnehmungen zur Aufnahme der Rollenhalterungen aufweist.

Zuletzt wird auch auf die US 2007/0235453 A1 verwiesen, die eine Mop-Eimer-Deckelanordnung aufweist, bei der ein vollständig abnehmbarer Deckel durch mehrere Klammern fest an einem Mopp-Eimer befestigt werden kann. Die Klammern können an einer unendlichen Anzahl von Stellen um einen Rand des Mopp-Eimers herum ausgetauscht werden, um eine hervorragende Abdichtung zu erzielen, wobei verhindert soll, dass der Inhalt des Eimers während des Transports ausläuft.

### Aufgabe der Erfindung

Die Aufgabe der vorliegenden Erfindung ist es, die Nachteile aus dem Stand der Technik zu überwinden. Insbesondere soll ein Wascheimer bereitgestellt werden, welcher einen niedrigen Schwerpunkt aufweist, welcher in einem mit Wasser gefüllten Zustand transportiert und gestapelt werden kann, welcher in einem mit Wasser gefüllten Zustand eine geringe Verformung aufweist, welcher nach Wunsch des Anwenders mit oder ohne Räder einsetzbar ist, welcher ein Schwammsieb verrutsch-sicher aufnehmen kann, welcher ohne Räder leicht über am Arbeitsort auftretende Hindernisse geschoben oder gezogen werden kann und welcher mit einem bisher üblichen Tragegriff verbindbar ist. Insbesondere soll ein Deckel schnell und sicher aufgeclipst werden können. Dabei ist es auch Aufgabe der Erfindung ein einfaches und schnelle Lösen der Clipsverbindung zu ermöglichen, ohne dass dabei der Wascheimer und die darin enthaltene Flüssigkeit unnötig und unkontrolliert bewegt werden muss.

### Lösung der Aufgabe

Zur Lösung der Aufgabe führen die Merkmale nach dem Anspruch 1.

Vorteilhafte Ausgestaltungen sind in den Unteransprüchen beschrieben.

In typischen Ausführungsbeispielen weist ein Wascheimer einen Boden auf, von welchem eine erste lange Wandung, eine zweite lange Wandung, eine erste kurze Wandung und eine zweite kurze Wandung wegragen. Alle Wandungen weisen einen gemeinsamen Eimerrand auf. Dieser Eimerrand bildet an seinem höchsten Punkt, welcher als Sattelbereich bezeichnet ist, eine lichte Fläche, sodass eine Eimerform gegeben ist.

Der Eimerrand ist im Schnittprofil U-förmig und weist einerseits einen kurzen Überhang und andererseits einen langen Überhang auf, welche an den jeweiligen Aussenseiten der Wandungen in Richtung des Bodens ragen. Der lange Überhang weist an gegenüberliegenden Seiten der jeweils langen Wandungen eine Deckelarretierung mit einer Clipsleiste auf. Die Deckelarretierung mit der Clipsleiste dient zur Aufnahme eines Deckels mit J-förmigen Deckelrand, wobei mit einer weiteren Deckelarretierung und einer dort angeordneten Clipskante auf einfache Weise eine Verclipsung hergestellt werden kann, die den Deckel mit dem Wascheimer lösbar verbindet. Entsprechend ist auf dem Eimerrand des Wascheimers der Deckel mit dem Deckelrand anordenbar.

Ein Ende des kurzen Überhangs liegt genau auf der Höhe der Clipsleiste der Deckelarretierung. Es ist das freie Ende welches dem Sattelbereich gegenüber liegt. Es ist daher möglich, dass die weiteren Deckelarretierungen des Deckels mit der Clipskante auch mit dem Ende des kurzen Überhangs eine Verclipsung eingehen können.

Vorteilhaft daran ist, dass auf diese Weise die Ausrichtung des Deckels beim Aufsetzen auf den Eimerrand des Wascheimers beliebig ist, solange eine Längsseite des Deckels einer langen Wandung zugeordnet ist und eine Deckelinnenseite der lichten Fläche des Wascheimers zugewandt ist. Dies erleichtert die Anwendung enorm.

In typischen Ausführungsbeispielen weist die erste lange Wandung, die zweite lange Wandung sowie die zweite kurze Wandung an ihrer Innenseite eine stufenförmige Waschsiebauflage auf. Diese Waschsiebauflage erlaubt es auf einfache Weise in Verbindung mit Haltelippen, dass in den Wascheimer ein Waschsieb verrutsch-sicher und auf einer vorgegebenen Höhe zwischen dem Boden und der lichten Fläche aufnehmbar ist. Dadurch kann ein Schwamm auf dem Waschsieb ausgedrückt werden, ohne dass dieses im Wascheimer verrutscht.

Die Waschsiebauflage bildet an der jeweiligen Aussenseite der ersten langen Wandung, der zweiten langen Wandung sowie der zweiten kurzen Wandung eine entsprechende Kante aus, die zu einer Verbreiterung des Abstandes zwischen der ersten langen Wandung und der zweiten langen Wandung, sowie zu einer Verbreiterung des Abstandes zwischen der ersten kurzen Wandung und der zweiten kurzen Wandung führt, wobei diese Verbreiterung in Richtung von dem Boden hin zur lichten Fläche erfolgt. Diese Verbreiterung macht die Handhabung leichter und erleichtert zudem auch das Ineinanderstapeln mehrerer erfindungsgemäßer Wascheimer.

Weiterhin wird durch den erfindungsgemäßen Wascheimer verhindert, dass das Waschsieb bei der Benutzung zu stark verbogen oder übermäßig durchgedrückt wird. Ist das Waschsieb in der Waschsiebauflage aufgenommen, erreichen die aus dem Waschsieb in Richtung des Bodens hervorgehenden röhrenförmigen Standbeine nicht den Boden des Wascheimers. Ein übliches Durchbiegen bei der Benutzung führt dazu, dass die äußeren Standbeine dann auf einer Rundkante aufliegen und die beiden mittleren Standbeine auf einem ersten Anschlagsbereich und einem zweiten Anschlagsbereich aufliegen. Der erste Anschlagsbereich und der zweite Anschlagsbereich sind rundliche bis ovale in Richtung einer lichten Fläche reichenden Auswölbung des Bodens. Die beiden Anschlagsbereiche und die Rundkante führen also dazu, dass das Waschsieb bei der Benutzung nicht übermäßig in Richtung des Bodens gedrückt oder verbogen werden kann und es kommt nicht zu einer Überbeanspruchung, welche das Waschsieb beschädigen könnte.

Die Rundkante ist zwischen dem Boden und der ersten langen Wandung und der zweiten langen Wandung und der ersten kurzen Wandung und der zweiten kurzen Wandung angeordnet und bildet einen rundlich geschwungenen Übergang. Die Rundkante ist nicht nur Anschlagspunkt für die Standbeine des Waschsiebs, sondern es ermöglicht zudem, dass Schmutz, welcher sich im Waschwasser des Wascheimers gelöst und gesammelt hat beim Ausgießen nicht im Wascheimer zurückbleibt, da dieser sich durch die rundlich geschwungene Ausformung zwischen dem Boden und Der Wandungen dort nicht halten kann. Aus dem gleichen Grund bleit beim Ausgießen des Waschwassers auch kein Wasser im Wascheimer zurück, welches sich sonst in den eckigen Kanten zwischen einem Boden und den Wandungen üblicher Wascheimer hält.

In typischen Ausführungsbeispielen des Wascheimers weist der Eimerrand an seinem Sattelbereich auf der Höhe von Bohrungen in den langen Wandungen Lagerschlitze auf. Diese Lagerschlitze stehen mit den Bohrungen in den beiden langen Wandungen in Verbindung.

In diese Bohrungen werden die Achsen oder Achsstummel von Waschrollen aufgenommen. Die Waschrollen dienen zum Abstreifen eines Schwammbretts. Damit diese Bohrungen möglichst lange den Belastungen der eingesetzten Waschrollen standhalten, werden in die Lagerschlitze Unterlegscheiben aufgenommen und gehalten. Die Unterlegscheiben sind dabei derart in die Lagerschlitze aufgenommen, dass ihre Öffnung deckungsgleich mit der jeweiligen Bohrung liegt. Die in die Bohrung aufgenommen Achsen der Waschrollen werden daher auch in die Öffnungen der Unterlegscheiben aufgenommen, wodurch die Bohrungen verstärkt werden und die Unterlegscheiben als Lager dienen. Zudem verfügen die Lagerschlitze über eine Verclipsung in ihrem Inneren, die in Form einer Verengung gewährleistet, dass die in die Lagerschlitze eingeführten Unterlegscheiben nicht mehr ohne weiteres aus den Lagerschlitzen ausfahren können. Die Haltbarkeit der Bohrungen zur Aufnahme der Waschrollen wird dadurch deutlich verlängert. Es kann auch vorgesehen sein, dass die Unterlegscheiben in den Kunststoff der Lagerschlitze, welche der gleiche Kunststoff ist aus dem auch der Wascheimer besteht, da die Lagerschlitze Einformungen in den Wascheimer sind, eingeschmolzen werden, wodurch eine feste Verbindung zwischen dem Lagerschlitz und der Unterlegscheibe zustande kommt.

In typischen Ausführungsformen weist der Boden des Wascheimers an seiner Aussenseite, welche die Seite ist, die von der lichten Fläche abgewandt ist, vier Kontaktbereiche auf. Diese Kontaktbereiche sind Standflächen des Wascheimers und befinden sich an den jeweiligen Eckbereichen des Bodens des Wascheimers. Diese Kontaktbereiche sind die einzigen Bereiche des Bodens und des Wascheimers, die mit einer Standfläche in Verbindung stehen. Die restliche Fläche des Bodens ist zu der Standfläche beabstandet. Diese erfindungsgemäße Ausformung weist zahlreiche Vorteile auf. Zum einen kann auf Standfüße, Standleisten oder dergleichen verzichtet werden, welche den Boden des Wascheimers immer von der Standfläche beabstanden und somit den Schwerpunkt des Wascheimers in Richtung der lichten Fläche verschieben. Dadurch, dass Teile des Bodens, nämlich die Kontaktbereiche die Standflächen des Wascheimers bilden, kann der Schwerpunkt des Wascheimers sehr tief gehalten werden. Zudem ist durch die geringe Grundfläche der Kontaktbereiche ein Schieben oder ziehen des Wascheimers über eine Standfläche auch im mit Wasser befüllten Zustand möglich und einfach.

Das Verschieben des Wascheimers über eine Standfläche auch im mit Wasser befüllten Zustand, oder auch über eine Standfläche, welche Hindernisse aufweist, beispielsweise einen Abfluss, Schwellen oder Fugen, wird dabei durch Anstoßrippen zusätzlich verbessert.

Die Rundkante, welche den Übergang zwischen den Wandungen und dem Boden bildet, ist an ihrer Aussenseite an den Eckbereichen mit Anstoßrippen ausgestattet. Die Anstoßrippen sind leistenförmigen Verstärkungen der Aussenseite der Rundkante, die in vertikaler Ausrichtung an den Eckbereichen der Rundkante in geschwungener Weise oberhalb und um die Kontaktbereiche des Bodens angeordnet sind. Die Anstoßrippen reichen bis zu den Kontaktbereichen, kommen aber nicht mit einer ebenen Standfläche in Kontakt. Ein Kontakt erfolgt erst, wenn die Standfläche ein, wie oben beschriebenes Hindernis aufweist, über welches der Wascheimer hinübergezogen oder - geschoben werden soll. Neben der Verstärkung der durch Anstoßungen stark beanspruchten Eckbereiche, erlauben die Anstoßrippen es den Wascheimer durch ihre geschwungenen Rundungen nach dem Prinzip einer Rampe auch leichter über Hindernisse, wie sie oben genannt wurden, zu ziehen oder zu schieben.

In typischen Ausführungsbeispielen weist der Wascheimer in den Eckbereichen des Bodens Radaufnahmen auf. Diese Radaufnahmen sind zylinderförmig und durchgreifen den Boden, wobei auf der Aussenseite des Bodens, also auf der Seite, die von der lichten Fläche abgewandt ist, die Radaufnahmen offen sind und eine Aufnahme für Räder aufweisen. Auf der Aussenseite des Bodens sind die Radaufnahmen derart angeordnet, dass sie, wenn der Wascheimer auf einer ebenen Standfläche steht, nicht mit der Standfläche in Kontakt kommen und von dieser beabstandet sind. Die Radaufnahmen weisen eine lösbare Verriegelung an der Innenseite auf die gewährleistet, dass Achsen und oder Radfortsätze dort aufgenommen und gehalten werden können. Auch ist es über diese Verriegelungen möglich das aufgenommene Rad wieder von der Radaufnahme zu trennen. Dies hat den Vorteil, dass ein Anwender den Wascheimer ohne Räder verwenden und für andere Anwendungsbereich auch Räder an dem Wascheimer anordnen kann. Der Wascheimer kann daher für unterschiedlichen Anwendungsbereiche verwendet werden und individuell mit Rädern ausgestattet werden oder nicht.

In typischen Ausführungsbeispielen weist der erfindungsgemäße Wascheimer ferner einen Handgriff auf. Dieser Handgriff geht aus dem langen Überstand des Eimerrands auf der Seite der ersten kurzen Wandung hervor und erlaubt ein sicheres und bequemes Greifen. Es ist vorgesehen, dass Wasser aus dem Wascheimer über den Eimerrand an der zweiten kurzen Wandung ausgegossen wird. Dazu ist es mittels des Griffs besonders leicht den Wascheimer einseitig anzuheben, so dass das Wasser ausgegossen werden kann.

Häufig erfolgt das Ausgießen des Wassers auch dadurch, dass der Wascheimer mit seinem Boden zunächst auf eine Kante, beispielsweise eine Kante eines Spülbeckens oder eines anderen Abgusses gestellt wird, bevor über das heben an dem Griff das Wasser über den Eimerrand ausgegossen wird. Um den Boden des erfindungsgemäßen Wascheimers zu verstärken und insbesondere vor Beschädigung zu schützen, weist der Boden an seiner Aussenseite, welche die Seite ist, die von der lichten Fläche abgewandt ist, mehrere parallel verlaufende Lamellen auf, die sich in Längsrichtung zwischen der ersten kurzen Wandung und der zweiten kurzen Wandung erstrecken. Diese Lamellen gehen aus dem Boden hervor, wenn der Wascheimer aber auf einer ebenen Standfläche steht, sind sie von der Standfläche beabstandet und kommen mit der Standfläche nicht in Kontakt. Die Lamellen tragen weiterhin zur Verstärkung und Verbesserung des Wascheimers bei, so dass dieser für unterschiedlichen Nutzungsbereichen einsetzbar ist.

Weiterhin ist vorgesehen, dass der Wascheimer zum Transport und zur einfachen Handhabung mit einem üblichen Tragegriff für Wascheimer ausrüstbar ist. Dieser bekannte und oft eingesetzte Tragegriff hat feste Maße und soll auch mit dem erfindungsgemäßen Wascheimer verbindbar sein. Dazu weist der Handgriff eine erste Tragegriffaufnahme im Bereich des Griffs auf und der kurze Überstand auf der gegenüberliegenden Seite des Wascheimers weist zudem eine Verbreiterung mit einer zweiten Tragegriffaufnahme auf. Dabei liegen die erste Tragegriffaufnahme und die zweite Tragegriffaufnahme auf einer horizontalen Linie, welche parallel zu der lichten Fläche verläuft.

Weiterhin ist der Abstand der beiden Tragegriffaufnahmen durch die Verbreiterung derart, dass ein üblicher Tragegriff in die Tragegriffaufnahmen aufgenommen werden kann.

Bei den Tragegriffaufnahmen handelt es sich um Bohrungen, die Achsfortsätze des Tragegriffs beweglich aufnehmen können. Diese Anordnung erlaubt es zusammen mit einer Tragegriffaufnahmeaussparung, die an einer ersten Querseite und einer gegenüber liegenden zweiten Querseite des Deckels an mittiger Position des Deckelüberhangs angeordnet ist, die bestehenden und bereits für andere Wascheimer verwendbaren Tragegriffe aufzunehmen, so dass Kosten und Aufwand eingespart werden können. Zudem können die Tragegriffe anderer ausgemusterter Wascheimer mit dem erfindungsgemäßen Wascheimer weiterverwendet werden, was zudem Ressourcen spart.

Weiterhin ist es von Bedeutung, dass mehrere Wascheimer ineinander gestapelt werden können, ohne dass sie dabei Schaden nehmen. Bei herkömmlichen Wascheimern war bei einem Ineinanderstapeln zu beobachten, dass diese später nur schwer voneinander zu trennen waren, da sich ein Unterdruck zwischen ihnen gebildet hat, die die ineinander gestapelten herkömmlichen Wascheimer zusammenhielt. In typischen Ausführungsformen weist der Wascheimer daher leistenförmige Begrenzungselemente auf. Diese Begrenzungselemente sind mit der Innenseite des langen Überhangs und der Innenseite des Handgriffs und auch mit den beiden kurzen Wandungen verbunden. Sie verlaufen dabei an der Aussenseite der ersten bzw. zweite kurzen Wandung in Richtung des Bodens, wobei sie ein freies Ende ausbilden. Dieses freie Ende der Begrenzungselemente liegt beim Ineinanderstapeln der erfindungsgemäßen Wascheimer auf dem Sattelbereich des Eimerrands der nächsten Wascheimers auf und beabstandet diese beiden Wascheimer und verhindert, dass diese zu tief ineinander rutschen und sich dadurch ein saugender Unterdruck bildet.

In typischen Ausführungsformen weist der Deckel des Wascheimers einen Deckelrand auf. Dieser Deckelrand besteht aus einer Innenwand die einerseits mit einer Deckelplatte verbunden ist und andererseits in eine Deckelauflage übergeht, wobei die Deckelauflage ihrerseits in einen Deckelüberhang übergeht.

An dem Deckelüberhang sind weitere Deckelarretierungen angeordnet, die eine Überhangverlängerung, eine Clipskante und einen Biegebereich aufweisen. Die weiteren Deckelarretierungen erlauben es, wie oben beschrieben, auf einfache Weise den Deckel über die Deckelarretierung des Eimerrands und das Ende des kurzen Überhangs mit dem Wascheimer zu verclipsen. Dazu weist die weitere Deckelarretierung des Deckels die Überhangverlängerung auf, welcher dazu dient die weitere Deckelarretierung anzugreifen und zu bewegen. Das Bewegen insbesondere das Biegen der weiteren Deckelarretierung wird durch den Biegebereich ermöglicht und erleichtert. Der Biegebereich ist eine Ausnehmung in der Deckelarretierung, so dass eine Wandstärke in diesem Bereich weniger stark ist und eine Biegen bzw. Bewegen der Überhangverlängerung bzw. der weiteren Deckelarretierung ermöglicht und erleichtert. Die Clipskante des Deckels ist das Gegenstück zur Clipsleiste des Wascheimers. Über diese beiden Elemente wird die Verclipsung von Wascheimer und Deckel ermöglicht. Zudem erlaubt die Clipskante des Deckels auch eine Verclipsung mit dem Ende des kurzen Überhangs des Eimerrandes des Wascheimers, da das Ende des kurzen Überhangs auf der gleichen Höhe wie die Clipsleiste angeordnet ist.

Es ist daher vorgesehen, dass die Clipskanten der weiteren Deckelarretierungen des Deckels hinter die Clipsleisten der Deckelarretierungen am langen Überhang des Eimerrands und/oder hinter das Ende des kurzen Überhangs des Eimerrands einrastbar bzw. verclipsbar sind. Dadurch ergibt sich der Vorteil, dass der Deckel nicht gesondert ausgerichtet werden muss bevor er auf dem Wascheimer aufgesetzt und dort verclipst werden kann, solange eine Längsseite des Deckels einer langen Wandung des Wacheimers zugeordnet ist und eine Deckelinnenseite der lichten Fläche des Wascheimers zugewandt ist.

Ferner ist bei dem Deckel des erfindungsgemäßen Wascheimers vorgesehen, dass die Innenwand zu der Deckelauflage in einem nach aussen ragenden Winkel von 92 bis 95 Grad verläuft und wobei der Deckelüberhang zu der Deckelauflage in einem Winkel von 91 bis 94 Grad angeordnet ist.

Ferner ist vorgesehen, dass der Deckelüberhang halb so lang wie die Innenwand ist, wobei die Länge der Innenwand dem Abstand zwischen der Deckelauflage und der Deckelplatte entspricht.

Diese Anordnungen führen zu mehreren wesentlichen Vorteilen. Die o.g. Anwiklung der Innenwand und des Deckelüberhangs zur Deckelauflage erlauben es, dass der Deckel auf dem Eimerrand des erfindungsgemäßen Wascheimers dicht abschließt sobald die Deckelauflage mit dem Sattelbereich in Verbindung steht. Dies ist vor allem dann wichtig, wenn das Waschwasser nach der Arbeit nicht direkt vor Ort ausgegossen werden kann. Da der Wascheimer mit dem Deckel sicher verschließbar ist, kann dieser beispielsweise in einem Ladebereich eines Fahrzeuges transportiert werden, um an einem geeigneten Ort ausgegossen zu werden.

Weiterhin führt die Länge der Innenwand dazu, dass die Deckelplatte vergleichsweise tief in dem Wascheimer angeordnet ist, wenn der Deckel auf dem Wascheimer aufgesetzt wurde. Dies erlaubt zudem eine sichere Stapelung mehrerer auch mit Waschwasser befüllter Wascheimer aufeinander. Weiterhin bildet der Deckle dadurch eine sichere Ablage für Werkzeuge oder dergleichen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine perspektivische Seitenansicht eines erfindungsgemäßen Wascheimers von schräg oben und ein Waschsieb;
- Figur 2: eine Draufsicht auf den erfindungsgemäßen Wascheimer mit eingesetztem Waschsieb;
- Figur 3: eine geschnittene Seitenansicht des Wascheimers entlang der Schnittlinie A nach Figur 2;
- Figur 4: eine perspektivisch geschnittene Seitenansicht des Wascheimers entlang der Schnittlinie A nach Figur 2;
- Figur 5: eine perspektivische Ansicht des Wascheimers 1 mit Blick auf den Boden 2;
- Figur 6: eine Draufsicht auf eine Deckelaussenseite eines erfindungsgemäßen Deckels;
- Figur 7: eine geschnittene Teilansicht des Deckels im Bereich einer weiteren Deckelarretierung;
- Figur 8: eine perspektivische Draufsicht auf eine Innenseite des erfindungsgemäßen Deckels von schräg oben;
- Figur 9: eine durchsichtige Seitenansicht des Deckels auf eine Längsseite;
- Figur 10: eine durchsichtige Seitenansicht des Deckels auf eine Querseite.

### Ausführungsbeispiel

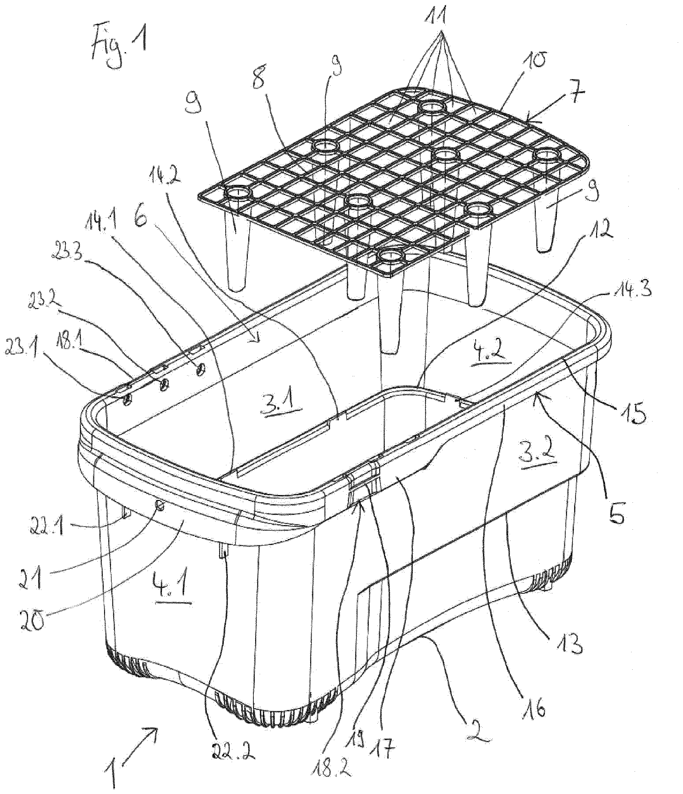

In Figur 1 ist ein erfindungsgemäßer Wascheimer 1 dargestellt. Der Wascheimer 1 weist einen Boden 2 auf, von welchem zwei lange Wandungen, nämlich ein erste lange Wandung 3.1 und eine gegenüberliegende zweite lange Wandung 3.2 weg ragen. Ebenfalls ragen zwei kurze Wandungen von dem Boden 2 weg, nämlich eine erste kurze Wand 4.1 und eine gegenüberliegende zweite kurze Wand 4.2. Die beiden langen Wandungen 3.1 und 3.2 sowie die beiden kurzen Wandungen 4.1 und 4.2 sind an den jeweiligen Eckbereichen miteinander verbunden und bilden eine gemeinsame und umlaufende Eimerrand 5 aus. Dieser Eimerrand 5 bildet an seinem höchsten Punkt, welcher als Sattelbereich 15 bezeichnet ist, eine lichte Fläche 6, so dass eine Eimerform gegeben ist.

Weiterhin ist in Figur 1 ein Waschsieb 7 ersichtlich. Das Waschsieb 7 weist eine flächige Gitterstruktur 8 auf, welche an acht Punkten von röhrenförmigen Standbeinen 9 durchbrochen ist. Diese röhrenförmigen Standbeine 9 sind beidseitig offen und verjüngen sich leicht mit zunehmenden Abstand zur Gitterstruktur 8. Die Gitterstruktur 8 ist nahezu rechteckig, eine gewölbten Seite 9 ist geschwungen ausladend ausgebildet, so dass sich die dort angeordneten Gitteröffnungen 11 von aussen, also von den gegenüberliegenden Eckbereichen hin zu einer dazwischenliegenden Mitte vergrößern.

Der Wascheimer 1 bildet an den beiden langen Wandungen 3.1 und 3.2 sowie an der zweiten kurzen Wandung 4.2 in einer Mitte zwischen dem Boden 2 und der lichten Fläche 6 eine Kante 13 aus. Diese Kante 13 ist nahezu rechtwinklig ausgerichtet und führt nach dem Beispiel einer Stufe zu einer Verbreiterung des Abstandes zwischen der ersten langen Wandung 3.1 und der zweiten langen Wandung 3.2, sowie zu einer Verbreiterung des Abstandes zwischen der ersten kurzen Wandung 4.1 und der zweiten kurzen Wandung 4.2, wobei diese Verbreiterung in Richtung von dem Boden 2 hin zur lichten Fläche 6 erfolgt. Also eine Verbreiterung nach oben hin, gesehen von einer Standfläche aus, erfolgt.

Diese Kante 13 bildet daher an den jeweiligen Aussenseiten der Wandungen 3.1, 3.2 und 4.2 einen Überhang und an den jeweiligen Innenseiten eine stufenförmige Auflage, welche eine Waschsiebauflage 12 bildet.

Mit Aussenseite ist jeweils die Seite gemeint, der keine andere Wandung gegenüberliegt. Mit Innenseite ist jeweils die Seite einer Wandung gemeint, der eine andere Wandung gegenüberliegt.

Die Kante 13 verläuft zudem nicht über die gesamte Länge der ersten langen Wandung 3.1 und der zweiten langen Wandung 3.2. In Richtung und auf der Strecke von der ersten kurzen Wandung 4.1 hin zur zweiten kurzen Wandung 4.2 beginnt die Kante 13 auf beiden langen Wandungen 3.1 und 3.2 erst nach ca. einem Drittel der Strecke sich geschwungen herauszuwölben. Danach verläuft die Kante 13 durchgehend über die Breite der zweiten kurzen Wandung 4.2. Mit Breite ist hier der Abstand gemeint den die zweite kurze Wandung 4.2 zwischen den beiden langen Wandungen 3.1 und 3.2 überbrückt.

Die sich durch die Kante 13 an der Innenseite des Eimers ausbildende Waschsiebauflage 12 dient der Aufnahme und Auflage des Waschsiebs 7. Dazu und insbesondre zur verrutsch-sicheren Aufnahme des Waschsiebs 7 bildet die Waschsiebauflage 12 in vorliegendem Ausführungsbeispiel sechs Haltelippen 14.1 bis 14.6 aus. In vorliegender Figur 1 sind abbildungsbedingt jedoch nur die Haltelippen 14.1 bis 14.3 ersichtlich, wobei die Haltelippen 14.1 und 14.2, voneinander beabstandet, an der Seite der Waschsiebauflage 12 angeordnet sind, die an der ersten lagen Wandung 3.1 liegt und die Haltelippe 4.2 an der Seite ersichtlich ist, die an der zweiten kurzen Wandung 4.2 angeordnet ist. Die in der Figur 1 nicht ersichtlichen Haltelippen 14.4, 14.5 und 14.6 sind entsprechend auf der nicht einsehbaren gegenüberliegenden Seite angeordnet.

Die Haltelippen 14.1 bis 14.6 sind Fortsätze der jeweiligen Wandung 3.1, 3.2 und 4.2, welche wenige Millimeter bis wenige Zentimeter an den nach innen gerichteten Seiten der Kante 13 zahnförmig in Richtung der lichten Fläche 6 hervorgehen. Die Haltelippen 14.1 bis 14.6 greifen in die jeweils äusseren Gitteröffnungen 11 der Gitterstruktur 8 des Waschsiebs 7 ein.

Der umlaufende Eimerrand 5 ist ein weitgehend umgekehrt U-förmiger Fortsatz der jeweiligen Wandungen 3.1, 3.2, 4.1 und 4.2, wobei dieser Eimerrand 5 den Sattelbereich 15 sowie einen kurzen Überhang 16 und einen langen Überhang 17 ausbildet.

Der Sattelbereich 15 ist der Bereich des Scheitels, also die obere Wölbung des Eimerrands 5, welche am weitesten von dem Boden 2 entfernt ist. Aus diesem Sattelbereich 15 erstreckt sich sowohl der kurze Überhang 16, als auch der lange Überhang 17 an den Aussenseiten der Wandungen 3.1, 3.2, 4.1, und 4.2 in Richtung des Bodens 2.

Der kurze Überhang 16 verläuft, beginnend auf der Hälfte der Strecke entlang der zweiten langen Wandung 3.2, zwischen der ersten kurzen Wandung 4.1 und der zweiten kurzen Wandung 4.2. Verläuft dann über die gesamte Breite der zweiten kurzen Wandung 4.2 bis zur Hälfte der Strecke der ersten langen Wandung 3.1, welche zwischen der ersten kurzen Wandung 4.1 und der zweiten kurzen Wandung 4.2 angeordnet ist.

Der lange Überhang 17 verläuft genau auf der gegenüberliegenden Seite und beginnt entsprechend ebenfalls auf der Hälfte der Strecke entlang der zweiten langen Wandung 3.2 zwischen der ersten kurzen Wandung 4.1 und der zweiten kurzen Wandung 4.2. Verläuft dann die gesamte Breite der ersten kurzen Wandung 4.1 bis zur Hälfte der Strecke der ersten langen Wandung 3.1, welche zwischen der ersten kurzen Wandung 4.1 und der zweiten kurzen Wandung 4.2 angeordnet ist.

Der lange Überhang 17 setzt sich ca. doppelt so lang wie der kurze Überhang 16 in Richtung des Bodens 2 an den jeweiligen Aussenseiten der Wandungen 3.1, 3.1 und 4.1 fort, wobei die beidseitigen Übergänge zwischen dem langen Überhang 17 und dem kurzem Überhang 16 fließend geschwungen ausgebildet sind.

Der lange Überhang 17 des Eimerrands 5 bildet jeweils beidseits, also auf der Seite der ersten langen Wandung 3.1 und genau gegenüberliegend auf der Seite der zweiten langen Wandung 3.2 eine Deckelarretierung 18.1 und 18.2 aus. Im Bereich der Deckelarretierung 18.1, 18.2 verringert sich ein Abstand des langen Überhangs 17 zu der jeweiligen langen Wandung 3.1, 3.2. Die Deckelarretierung 18.1, 18.2 bildet daher eine in Richtung der Aussenseite der langen Wandung 3.1, 3.2 eingeformte Einbuchtung aus.

Die Deckelarretierung 18.1, 18.2 weist weiterhin eine Clipsleiste 19 auf. Diese Clipsleiste 19 verläuft leistenförmig parallel zu der lichten Fläche 6 über die Einbuchtung der Deckelarretierung 18.1, 18.2 und teilt somit Deckelarretierung 18.1, 18.2 in einen oberen und einen unteren Bereich. Dies Clipsleiste 19 überbrückt somit die Einbuchtung der Deckelarretierung 18.1, 18.2. Dabei liegt die Clipsleiste 19 auf der gleichen Ebene wie der lange Überhang 17.

Weiterhin ist die Clipsleiste 19 auf genau der Höhe angeordnet, die dem Ende des kurzen Überhangs 16 entspricht. Der Abstand zwischen der Clipsleiste 19 und einem Ende des langen Überhangs 17 entspricht daher der Länge, um die der lange Überhang 17 länger ist als der kurze Überhang 16. Das Ende des kurzen Überhangs 16 ist das freie Ende kurzen Überhangs 16, welches dem Sattelbereich 15 gegenüber liegt.

Der Eimerrand 5 bildet auf der Seite der ersten kurzen Wandung 4.1, ausgehend aus dem langen Überhang 17 zudem einen Handgriff 20 aus. Der Handgriff 20 verläuft über die gesamte Breite der ersten kurzen Wandung 4.1. Der Handgriff 20 ist aus einer Auswölbung des langen Überhangs 17 gebildet, wobei sich durch die Auswölbung der Abstand des Handgriffs 20 zu der ersten kurzen Wandung 4.1 im Vergleich zum Anstand des langen Überhangs 17 zu der ersten kurzen Wandung 4.1 vergrössert. Diese Abstandsvergrößerung ist derart, dass zwischen den Handgriff 20 und der ersten kurzen Wandung 4.1 bequem mit einer Hand bzw. mit den Fingern einer Hand eingegriffen werden kann. Die Auswölbung des langen Überhangs 17 zum Handgriff 20 beginnt auf der Höhe des Endes des kurzen Überhangs 16 bzw. der Höhe der Clipsleiste 19.

Weiterhin weist der Handgriff 20 im Bereich zum Übergang zwischen dem langen Überhang 17 und dem Handgriff 20 an mittlerer Position eine erste Tragegriffaufnahme 21 in Form einer runden Bohrung auf, die den Handgriff 20 durchgreift.

Der Wascheimer 1 weist weiterhin Begrenzungselemente 22.1, 22.1, 22.3, 22.4 auf. An der Aussenseite der ersten kurzen Wandung 4.1 verlaufen die Begrenzungselemente 22.1 und 22.2 leistenförmig senkrecht zwischen der Lichten Fläche 6 und dem Boden 2. Entsprechend verlaufen die Begrenzungselemente 22.3, 22.4 auf der gegenüberliegenden Seite an der Aussenseite der zweiten kurzen Wandung 4.2, welche abbildungsbedingt nicht ersichtlich sind. Die Begrenzungselemente 22.1, 22.1, 22.3, 22.4 sind leistenförmig und beginnen in der U-Wölbung des Eimerrands 5 und sind sowohl mit der Innenseite des langen Überhangs 17 und der Innenseite des Handgriffs 20 als auch mit der kurzen Wandung 4.1, 4.2 verbunden und verlaufen an der Aussenseite der ersten bzw. zweite kurzen Wandung 4.1, 4.2 in Richtung des Bodens 2.

Die Länge der Begrenzungselemente 22.1, 22.1, 22.3, 22.4 entspricht der doppelten Länge des langen Überhangs 17. Die Begrenzungselemente 22.1, 22.1, 22.3, 22.4 dienen der Stapelbarkeit mehrerer Wascheimer 1, wobei ein zu tiefes ineinanderstecken mehrerer Wascheimer 1 durch eine Auflage der freien Enden der Begrenzungselemente 22.1, 22.1, 22.3, 22.4 auf dem jeweiligen Sattelbereich 15 des jeweiligen Eimerrandes 5 verhindert wird. Mit freiem Enden der Begrenzungselemente 22.1, 22.1, 22.3, 22.4 ist der freiliegende Bereich gemeint, der dem Bereich gegenüberliegt, der in der U-Wölbung des Eimerrands 5 entspringt.

Der Wascheimer 1 zeichnet sich dadurch aus, dass alle Ecken und alle Kanten an den Innenseiten, wie den Aussenseiten abgerundet sind oder als Rundungen oder Wölbungen ausgebildet sind.

Auf der Höhe des langen Überhangs 17 sind in der ersten langen Wandung 3.1 drei Bohrungen 32.1, 23.2 und 23.3 angeordnet und gegenüber, in der zweiten langen Wandung 3.1, sind an gleiche Position gespiegelt drei weitere Bohrungen 23.4, 23.5 und 23.6 angeordnet. Die Bohrungen 23.1, 23.2, 23.3, 23.4, 23.5 und 23.6 durchgreifen die Wandungen 3.1 oder 3.2.

Die Bohrung 23.1 ist in der ersten langen Wandung 3.1 direkt an dem Übergang zum Sattelbereich 15 des Eimerrandes 5 und nur wenige Zentimeter von der ersten kurzen Wandung 4.1 entfernt positioniert. Die gegenüberliegende Bohrung 23.4 ist entsprechend in der zweiten langen Wandung 3.2 direkt an dem Übergang zum Sattelbereich 15 des Eimerrandes 5 und nur wenige Zentimeter von der ersten kurzen Wandung 4.1 entfernt positioniert. Die Bohrungen 23.4, 23.5 und 23.6 sind in Figur 1 abbildungsbedingt nicht ersichtlich, jedoch spiegelidentisch zu den Bohrungen 23.1, 23.2 und 23.3 angeordnet. Daher werden folgend nur die Bohrungen 23.1, 23.2 und 23.3 beschrieben.

Die Bohrung 23.2 ist mit einem Abstand zu der Bohrung 23.1 in Richtung zu der zweiten kurzen Wandung 4.1 in der ersten langen Wandung 3.1 angeordnet, wobei dieser Abstand dem Abstand zwischen der Bohrung 23.1 und der ersten kurzen Wandung 4.1 entspricht. Weiterhin ist die Bohrung 23.2 im Vergleich zu der Bohrung 23.1 nicht direkt am Übergang zum Sattelbereich 15 angeordnet, sondern um ca. 50 Prozent der Länge ihres Durchmessers von dieser Position in Richtung des Bodens 2 nach unten versetzt. Entsprechendes gilt für die gegenüber angeordnete Bohrung 23.5 in gespiegelter Weise.

Die Bohrung 23.3 ist mit einem weiteren Abstand zu der Bohrungen 23.2 in Richtung zu der zweiten kurzen Wandung 4.1 in der ersten langen Wandung 3.1 angeordnet, wobei der weiterte Abstand dem Abstand zwischen der Bohrung 23.1 und der Bohrung 23.2 entspricht. Weiterhin ist die Bohrung 23.3 um die volle Länge ihres Durchmessers von dem Übergang zu dem Sattelbereich 15 des Eimerrandes 15 in Richtung des Bodens 2 nach unten versetzt. Entsprechendes gilt für die gegenüber angeordnete Bohrung 23.6 in gespiegelter Weise.

Die Bohrungen 23.1 bis 23.6 dienen der Aufnahme von Waschrollen bzw. deren beidseitig austretenden Achsen, Achsstummel oder Achsfortsätzen. Über die Bohrungen 23.1 bis 23.6 können entsprechend der Paarung der gegenüberliegenden Bohrungen 23.1 und 23.4, der gegenüberliegenden Bohrungen 23.2 und 23.5 sowie der gegenüberliegenden Bohrungen 23.3 und 23.6 drei Waschrollen parallel zueinander in drei unterschiedlichen Abständen zu dem Boden 2 die lichte Fläche 6 überspannend aufgenommen werden.

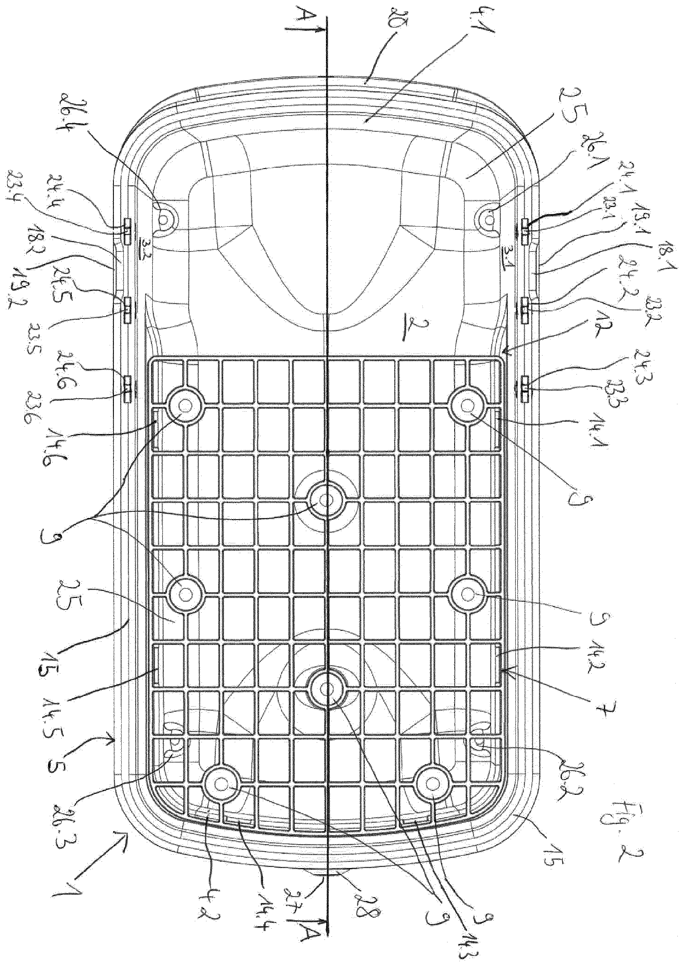

In Figur 2 ist eine Draufsicht auf den erfindungsgemäßen Wascheimer 1 mit eingesetztem Waschsieb 7 ersichtlich. Zudem ist eine Schnittlinie A eingezeichnet.

In Figur 2 sind Lagerschlitze 24.1 bis 24.6 ersichtlich. Die Lagerschlitze 23.1. bis 23.3 sind im Bereich des langen Überhangs 17 in den Sattelbereich 15 des Eimerrands 5 eingefügt. Jeder Lagerschlitz 24.1 bis 24.6 ist dabei einer Bohrung 23.1 bis 23.6 zugeordnet und steht mit dieser in Verbindung. In die Lagerschlitze 24.1 bis 24.6 werden metallisches Lager, beispielsweise Unterlegscheiben, aufgenommen, welche die Aufnahme und Lagerung der Achsen oder Achsfortsätzen der Waschrollen verstärkt. Dabei sind die Lagerschlitze 24.1 bis 24.6 derart ausgebildet, dass die Unterlegscheiben derart einsteckbar sind, dass die Öffnung der Unterlegscheiben deckungsgleich mit der jeweiligen Bohrung 23.1 bis 23.6 liegt. Zudem ist innerhalb der Lagerschlitze 24.1 bis 24.6 eine Verengung angeordnet, welche verhindert, dass eine eingeführte Unterlegscheibe wieder ohne Weiteres aus dem Lagerschlitz 24.1 bis 24.6 ausfahren kann.

Weiterhin ist ersichtlich, dass das Waschsieb 7 auf der Waschsiebaufnahme 12 aufliegt und von den Haltelippen 14.1, 14.2, 14.3, 14.4, 14.5, 14.6 verrutschsicher gehalten wird. Hier sind auch die röhrenförmigen Standbeine 9 des Waschsiebs 7 ersichtlich, wobei zu erkennen ist, dass sie jeweils beidseitig offen sind und sich mit zunehmenden Abstand zur Gitterstruktur 8 leicht verjüngen.

Der Boden 2 ist nicht plan ausgeformt, sondern weist mehrere Erhöhungen in Richtung der lichten Fläche 6 auf sowie eine ihn umschließende Rundkante 25. Die Rundkante 25 bildet einen rundlich geschwungenen Übergang zu den jeweiligen Wandungen 3.1, 3.2, 4.1 und 4.2. Die Breite der Rundkante 25 beträgt vorzugsweise ein Zehntel der Breite zwischen der ersten langen Wandung 3.1 und der zweiten langen Wandung 3.2, wobei mit Breite die Strecke zwischen der ersten langen Wandung 3.1 und der zweiten langen Wandung 3.2 gemeint ist.

An der Rundkante 25 zum Übergang an die erste und zweite lange Wandung 3.1, 3.2 und im Eckbereich zu den jeweiligen kurzen Wandungen 4.1 und 4.2, ist jeweils eine Radaufnahme 26.1, 26.2, 26.3 und 26.4 angeordnet.

An der Seite der zweiten kurzen Wandung 4.1 geht eine Verbreiterung 28 aus dem kurzen Überhang 16 hervor. Diese Verbreiterung 28 weist eine zweite Tragegriffaufnahme 27 in Form einer runden Bohrung auf. Die erste Tragegriffaufnahme 21 und die zweite Tragegriffaufnahme 27 liegen auf einer horizontalen Linie, welche parallel zu der lichten Fläche 6 verläuft. Zudem ist ihr Abstand zueinander derart, dass ein üblicher Wascheimertragegriff in diese beiden Tragegriffaufnahmen aufgenommen werden kann. Dieser dazu vorgegebene Abstand wird durch die Verbreiterung 28 erreicht.

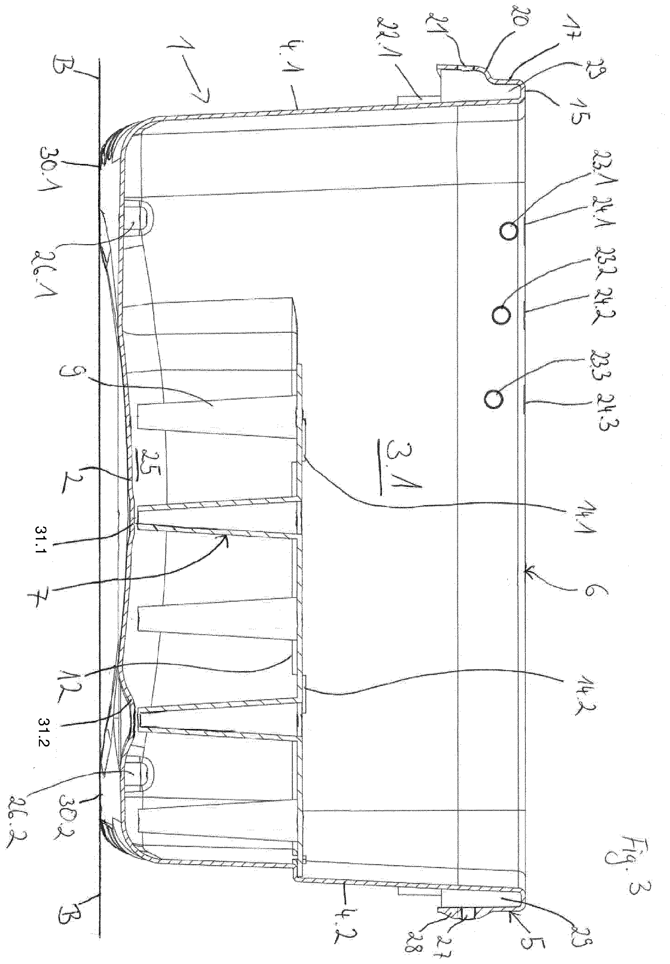

In Figur 3 ist eine geschnittene Seitenansicht des Wascheimers 1 entlang der Schnittlinie A nach Figur 2 dargestellt. Zudem ist eine fiktive Standfläche B eingezeichnet, auf der der Wascheimer 1 steht.

Hier ist die U-Form des Eimerrandes 5 gut ersichtlich. Weiterhin ist der Handgriff 20 als Auswölbung des langen Überhangs 17 zu erkenne, wobei sich durch die Auswölbung der Abstand des Handgriffs 20 zu der ersten kurzen Wandung 4.1 im Vergleich zum Anstand des langen Überhangs 17 zu der ersten kurzen Wandung 4.1 vergrössert.

In dieser Darstellung sind ferner Eimerrandwandungen 29 ersichtlich, welche in regelmäßigen Abständen zueinander den kurzen Überhang 16, den langen Überhang 17 und auch den Handgriff 20 innerhalb der U-Wölbung des Eimerrandes 5 mit der jeweiligen Wandung 3.1, 3.2, 4.1 und 4.2 verbinden.

Dies trägt zu einer Stabilisierung des Eimerrandes 5 bei, so dass sich dieser bei Belastungen weniger stark verformt.

Weiterhin ist der Boden 2 im Schnittprofil ersichtlich, wobei zu erkennen ist, dass sich der Boden 2 in der Mitte zwischen der ersten kurzen Wandung 4.1 und der zweiten kurzen Wandung 4.1 in Richtung der lichten Fläche 6 wölbt, so dass sich ein Abstand zu der Standfläche B ergibt. Steht der Wascheimer 1 auf der Standfläche B, berühren lediglich vier Kontaktbereiche 30.1, 30.2, 30.3 und 30.4 die Standfläche B. Diese vier Kontaktbereiche 30.1, 30.2, 30.3 und 30.4 sind Teil einer Aussenseite des Bodens 2, also der Seite, die nicht der lichten Fläche 6 zugewandt ist. In der vorliegenden geschnittenen Darstellung ist nur der Kontaktbereich 30.1 und der Kontaktbereich 30.2 ersichtlich. Die Kontaktbereiche 30.1, 30.2, 30.3 und 30.4 sind in den jeweiligen Eckbereichen von den langen Wandungen 3.1, 3.2 zu den kurzen Wandungen 4.1, .42 angeordnet.

Der Boden 2 weist ferner zwei Anschlagsbereiche, einen ersten Anschlagsbereich 31.1 und einen zweiten Anschlagsbereich 31.2, auf. Diese Anschlagsbereiche 31.1 und 31.2 sind rundliche oder ovale Auswölbungen aus dem Boden 2 die ebenfalls in Richtung der lichten Fläche 6 gerichtet sind. Sie dienen als Anschlagspunkte für die beiden mittig in der Gitterstruktur 8 des Waschsiebs 7 angeordneten Standbeine 9. Ist das Waschsieb 7 ordnungsgemäß in der Waschsiebaufnahme 12 angeordnet, berühren die Standbeine 9 diese Anschlagsbereiche 31.1 und 31.2 nicht. Eine Berührung bzw. ein Anschlag erfolgt erst, wenn das Waschsieb 7 benutzt wird und dabei in Richtung des Bodens 2 gedrückt bzw. gebogen wird.

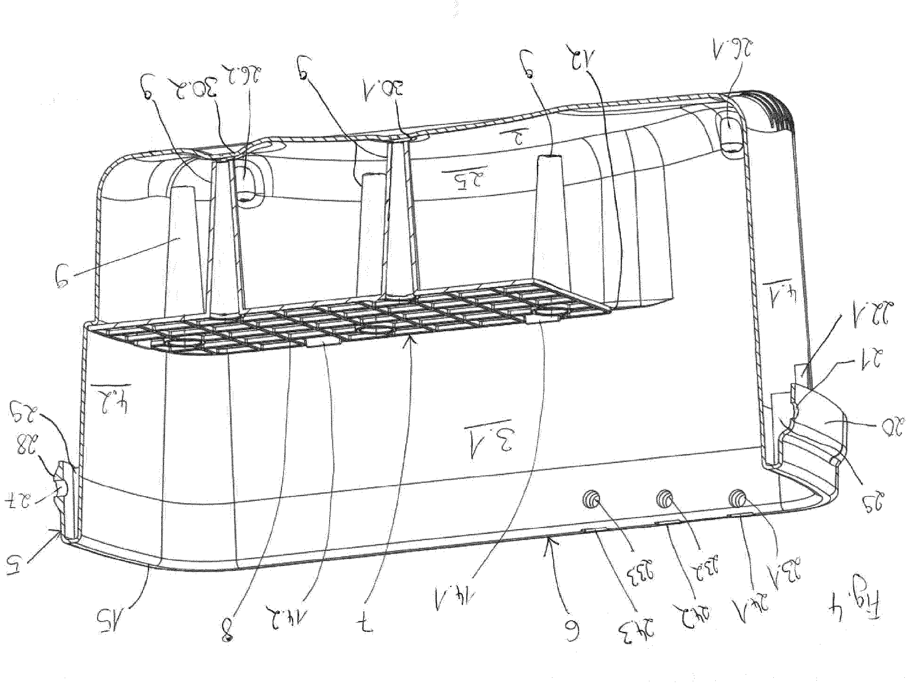

In Figur 4 ist eine perspektivisch geschnittene Seitenansicht des Wascheimers 1 entlang der Schnittlinie A nach Figur 2 dargestellt. Hier sind besonders die aus dem Boden 2 hervorgehenden Radaufnahmen 26.1 und 26.2 ersichtlich. Die Zylinderform der Radaufnahmen 26.1 und 26.2 erlaubt eine Aufnahme von Radachsen über eine entsprechende Öffnung bzw. Aufnahme, welche an der Aussenseite des Bodens 2 angeordnet ist. Auf der Innenseite des Bodens 2 sind die Radaufnahmen 26.1, 26.2, 26.3 und 26.4 geschlossen.

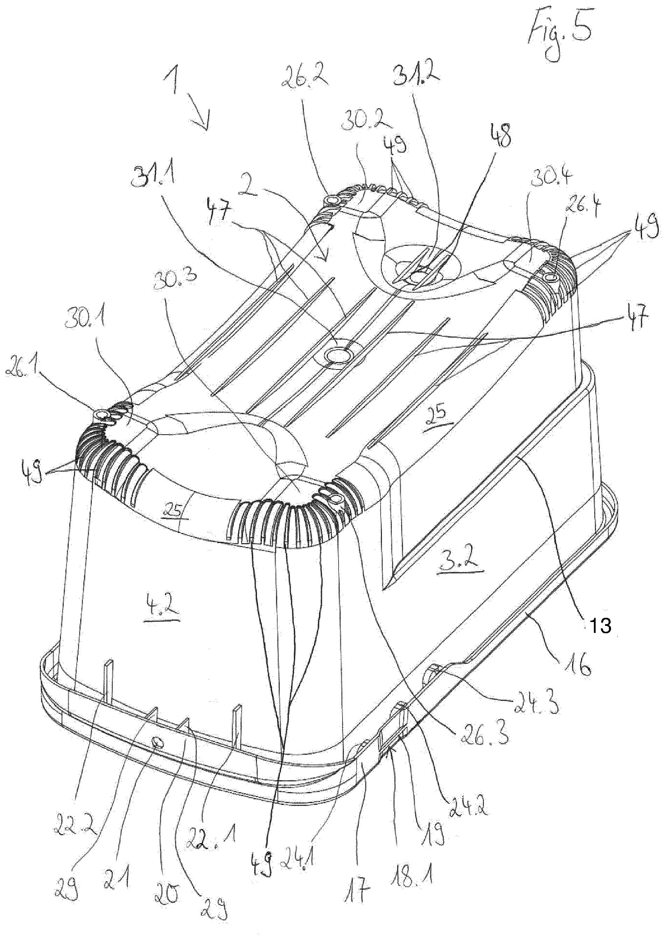

In Figur 5 ist eine perspektivische Ansicht des Wascheimers 1 mit Blick auf die Aussenseite des Bodens 2 dargestellt. Ersichtlich sind die vier Kontaktbereiche 30.1, 30.2, 30.3 und 30.2, welche den Bereich des Bodens 2 bilden, der mit der Standfläche B, siehe Figur 3, in Kontakt kommt. Dabei ist der Kontaktbereich 30.1, 30.2, 30.3 und 30.2 einem jeweiligen Eckbereich zwischen einer langen Wandung 3.1, 3.2, und einer kurzen Wandung 4.1, 4.2 zugeordnet. Der restliche Bereich des Bodens 2 ist von der Standfläche B beabstandet und steht nicht mit der Standfläche B in Verbindung.

Im Bereich des jeweiligen Kontaktbereichs 30.1, 30.2, 30.3 und 30.2 bildet die Rundkante 25 an ihrer Aussenseite Anstoßrippen 49 aus. Diese Anstoßrippen 49 sind an der Aussenseite der Rundkante 25 in Längsrichtung von dem Boden 2 hin zu der lichten Fläche 6 ausgerichtet, wobei sie wenige Millimeter bis wenige Zentimeter aus der Rundkante 25 hervorgehen. Die Anstoßrippen 49 der Rundkante 25 verstärken daher den jeweiligen Eckbereich des Wascheimers 1 nach aussen um die Kontaktbereiche 30.1, 30.2, 30.3 und 30.2 herum. Weiterhin dienen die Anstoßrippen 49 als Gleithilfe und Anstoßbereich.

Zudem sind auf der Aussenseite des Bodens 2 auch die zylinderförmigen Radaufnahmen 26.1, 26.2, 26.3, 26.4, welche an dieser Aussenseite eine Aufnahme für Räder aufweisen, von den Anstoßrippen 49 umgeben.

Weiterhin sind in Figur 5 Lamellen 47 ersichtlich. Die Lamellen 47 sind leistenförmige Verstärkungen die aus der Aussenseite des Bodens 2 hervorgehen, und sich in Längsrichtung im dem Bereich zwischen der ersten kurzen Wandung 4.1 und der zweiten kuren Wandung 4.2 erstrecken. In vorliegendem Ausführungsbeispiel liegen sieben Lamellen 47 parallel in dieser Längsausrichtung nebeneinander, wobei die mittele Lamelle 47 durch den ersten Anschlagsbereich 31.1 in ihrer Mitte unterbrochen ist.

Die Lamellen 47 schmiegen sich in beide Längsrichtungen, also in Richtung der ersten kurzen Wandung 4.1 und der zweiten kuren Wandung 4.2 wieder an den Boden 2 an, da der Boden 2 in diesen Richtungen seinen Abstand zu der Standfläche B verringert, bzw. in Richtung der jeweiligen Ecken an das Niveau der Kontaktbereiche 30.1, 30.2, 30.3 und 30.2 annähert. Daher überspannen die Lamellen 47 nur einen Teil der Einwölbung des Bodens 2. Eine Tiefer der jeweiligen Lamelle 49 ist daher in ihrer jeweiligen Mitte, welcher auf der Höhe des ersten Anschlagsbereichs 31.1 liegt, am größten und nimmt dann in beide Längsrichtung ab. Mit Tiefe ist die Ausdehnung der Lamellen 47 zwischen dem Boden 2 und der Standfläche B gemeint.

Die Lamellen 47 berühren die Standfläche B (siehe Figur 3) nicht, wenn der Wascheimer 1 ordnungsgemäß mit den Kontaktbereiche 30.1, 30.2, 30.3 und 30.2 auf einer ebenen Standfläche steht.

Weiterhin weist der zweite Anschlagsbereich 31.2 an der Aussenseite des Bodens 2 zwei parallel verlaufende und sich ebenfalls in Längsrichtung zwischen der ersten kurzen Wandung 4.1 und der zweiten kuren Wandung 4.2 erstrecke Anschlagslamellen 48 auf. Die Anschlagslamellen 48 überspannen die in Richtung der lichten Fläche 6 gerichtete Einwölbung des zweite Anschlagsbereichs 31.2, was zu einer Verstärkung führt und das Verschieben des Wascheimers 1 auf einer unebenen Fläche erleichtert.

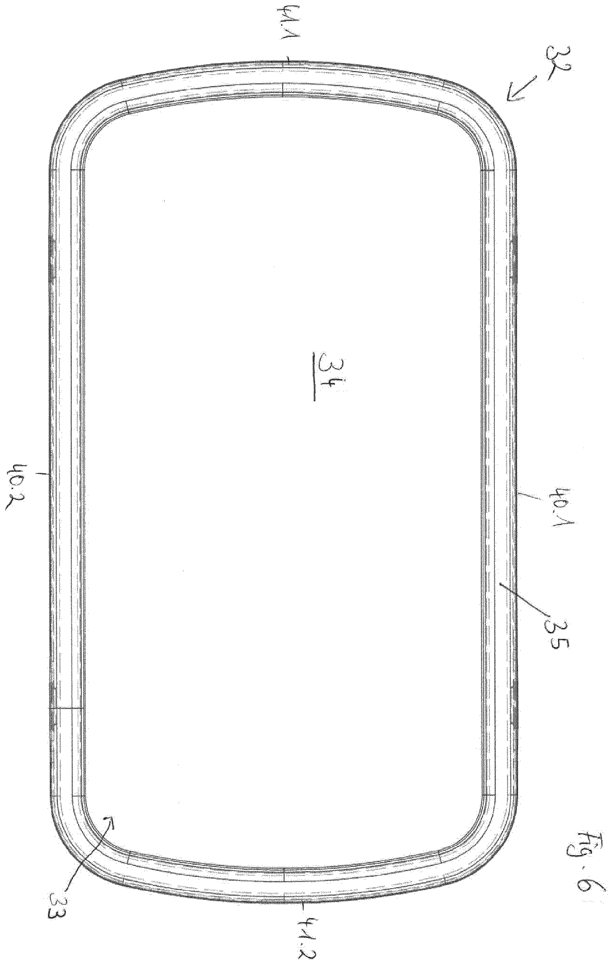

In Figur 6 ist ein erfindungsgemäßer Deckel 32 in einer Draufsicht dargestellt, wobei eine Deckelaußenseite 33 ersichtlich ist. Die Deckelaußenseite 33 ist die Seite, die bei ordnungsgemäßer Verwendung des Deckels 32, nämlich dem Aufsetzen auf dem Eimerrand 5 des Wascheimers 1, von dem Wascheimer 1 abgewandt ist.

Der Deckel 32 besteht im Wesentlichen aus zwei Bereichen, nämlich aus einer Deckelplatte 34, welche durch einen aussen liegenden Deckelrand 35 umschlossen ist. Der Deckelrand 35 wie auch die Deckelplatte 34 weisen entsprechend ihrer abgerundeten rechteckigen Grundform zwei gegenüberliegende lange Längsseiten 40.1 und 40.2 sowie zwei gegenüberliegende kurze Querseiten 41.1 und 41.2 auf.

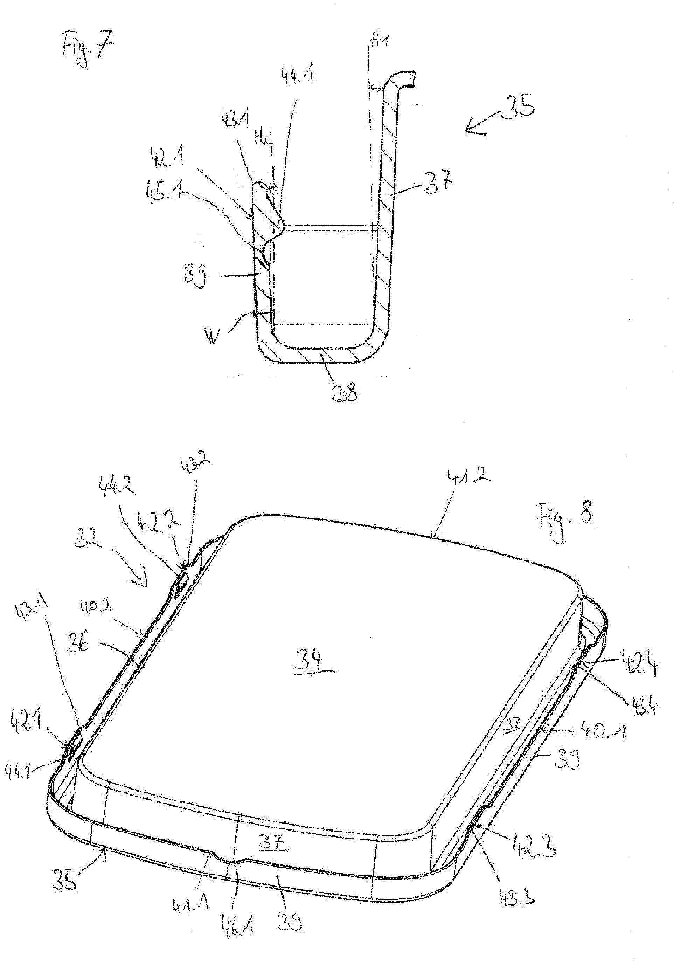

In Figur 8 ist der Deckel 32 mit Blick auf eine Deckelinnenseite 36 dargestellt. Aus dieser Perspektive ist die Ausformung des Deckelrandes 35 ersichtlich, welche J-Förmig ist und insbesondere auch in der geschnittenen Teilansicht des Deckels im Bereich einer weiteren Deckelarretierung 42.1, 42.2, 42.3, 42.4 in Figur 7 dargestellt ist.

Der Deckelrand 35 weist eine Innenwand 37 auf, welche einerseits mit der Deckelplatte 34 verbunden ist und andererseits in eine Deckelauflage 38 übergeht. Die Deckelauflage 38 verläuft weitgehend parallel zu der Deckelplatte 35. Die Deckelauflage 38 geht ihrerseits in einen Deckelüberhang 39 über. Die Innenwand 37 und der Deckelüberhang 39 liegen sich gegenüber, wodurch sich die J-förmige Ausformung des Deckelrandes 35 im Schnittbild ergibt.

Allerdings verlaufen die Innenwand 37 und der Deckelüberhang 39 nicht parallel zueinander. Wie in Figur 7 und Figur 8 andeutungsweise zu erkennen ist, verläuft die Innenwand 37 zu der Deckelauflage 38 in einem leicht nach aussen ragenden Winkel, welcher 92 bis 95 Grad beträgt. Mit nach aussen ragend ist gemeint, dass die Innenwand 37 von dem Deckelüberhang 39 wegragt.

Weiterhin verläuft der Deckelüberhang 39 zu der Deckelauflage 38 ebenfalls in einem nach aussen ragenden Winkel, welcher 91 bis 94 Grad beträgt. Mit nach aussen ragend ist hier gemeint, dass der Deckelüberhang 39 von der Innenwand 37 wegragt. Zur besseren Darstellung sind in der Figur 7 entsprechende Hilfslinien H1 und H2 eingezeichnet.

Der Deckelüberhang 39 ist dabei nur halb so lang wie die Innenwand 37, wobei die Länge der Innenwand 37 der Abstand zwischen der Deckelauflage 38 und der Deckelplatte 34 ist.

Diese Ausformung, zusammen mit den jeweils zu der Deckelauflage 39 leicht angewinkelten Innenwand 37 und dem leicht angewinkelten Deckelüberhang 39, erlauben eine einfache und vor allem dichte Verbindung zwischen dem Deckel 32 und dem Wascheimer 1.

Weiterhin ist ersichtlich, dass der Deckelrand 35 an dem Deckelüberhang 39 die weitere Deckelarretierungen 42.1, 42.2, 42.3, 42.4 aufweist. Die weiteren Deckelarretierungen 42.1, 42.2, 42.3, 42.4 weisen im Wesentlichen drei Bereich auf, nämliche eine Überhangverlängerung 43.1, 43.2, 43.3, 43.4, eine Clipskante 44.1, 44.2, 44.3, 44.4 und einen Biegebereich 45.1, 45.2, 45.3, 45.4.

Die Überhangverlängerung 43.1, 43.2, 43.3, 43.4 ist eine partielle Ausbuchtung des Deckelüberhangs 39 in die von der Deckelauflage 38 weg gerichtete Richtung.

Die Clipskante 44.1, 44.2, 44.3, 44.4 ist eine parallel zu der der Deckelauflage 38 verlaufende keilförmige Ausweitung des Deckelüberhangs 39 im Bereich der Überhangverlängerung 43.1, 43.2, 43.3, 43.4 auf der Seite, die in Richtung der Innenwand 37 gerichtet ist.

Der Biegebereich 45.1, 45.2, 45.3, 45.4 ist ein Bereich des Deckelüberhangs 39, welcher sich unmittelbar an die Clipskante 44.1, 44.2, 44.3, 44.4 auf der Seite, die in Richtung der Deckelauflage 38 gerichtet ist, anschließt. Bei dem Biegebereich 45.1, 45.2, 45.3, 45.4. ist eine Wandstärke W des Deckelüberhangs 39 um ein Drittel bis zu einer Hälfte verringert. Dies erlaubt die weitere Deckelarretierung 42.1, 42.2, 42.3, 42.4 durch händischen Zug an der Überhangverlängerung 43.1, 43.2, 43.3, 43.4 nach Aussen zu biegen, wobei mit Aussen die Seite gemeint ist, die von der Innenseite 37 abgewandt ist.

Die weiteren Deckelarretierungen 42.1 und 42.2 sind auf der einen Längsseite 40.1 des Deckelüberhangs 39 in unmittelbarer Nähe zu den Eckbereichen zu den beiden Querseiten 4.1, und 41.2 angeordnet. Die weiteren Deckelarretierungen 42.3 und 42.4 sind genau gegenüber auf der anderen Längsseite 40.2 des Deckelüberhangs 39 ebenfalls in unmittelbarer Nähe zu den Eckbereichen zu den beiden Querseiten 4.1, und 41.2 angeordnet.

Die Positionierung der weiteren Deckelarretierungen 42.1, 42.2, 42.3, 42.4 ist derart, dass sie, wenn der Deckel 32 auf den Wascheimer 1 in ordnungsgemäßer Weise aufgesetzt wird, in die beiden Deckelarretierungen 18.1 und 18.2 des langen Überhangs 17 des Wascheimers 1 eingreifen. Dabei spielt die Ausrichtungen des Deckels 32 in der Hinsicht, welche Querseite 41.1, 41.2 des Deckels 32, welcher kurzen Wandung 4.1, 4.2 des Wascheimers 1 zugeordnet wird, keine Rolle. Diejenigen weiteren Deckelarretierungen 42.1, 42.2, 42.3, 42.4 die daher nicht in die beiden Deckelarretierungen 18.1 und 18.2 des langen Überhangs 17 des Wascheimers 1 eingreifen, also entweder die beiden sich gegenüberliegenden weiteren Deckelarretierungen 42.1 und 42.3 oder die beiden sich gegenüberliegenden weiteren Deckelarretierungen 42.2 und 42.4, greifen daher an das Ende des kurzen Überhangs 16 des Wascheimers 1 ein.

Das Eingreifen erfolgt dadurch, dass die Clipskanten 44.1, 44.2, 44.3, 44.4 der weiteren Deckelarretierungen 42.1, 42.2, 42.3, 42.4 hinter die Clipsleisten 19 der Deckelarretierungen 18.1 und 18.2 des Wascheimers 1 bzw. hinter das Ende des kurzen Überhangs 16 des Wascheimers 1 greifen und dort einrasten bzw. verclipsen. Hinter die Clipsleisten 19 greifen bzw. einrasten bedeutet, dass die Clipskante 44.1, 44.2, 44.3, 44.4 beim Aufsetzen des Deckels 32 auf den Wascheimer 1 in Richtung der Standfläche B (siehe Figur 3) über die Clipsleiste 19 geschoben wird, wodurch eine lösbare Verbindung bzw. Verclipsung entsteht.

Durch das händische Ziehen an der Überhangverlängerung 43.1, 43.2, 43.3, 43.4, welche dabei bedingt durch den Biegebereich 45.1, 45.2, 45.3, 45.4 in Zugrichtung nachgibt, kann die Verbindung bzw. Verclipsung wieder gelöst werden, wobei die Clipskante 44.1, 44.2, 44.3, 44.4 zurück, also entgegen der Richtung zur Standfläche B, über die Clipsleisten 19 bewegbar ist.

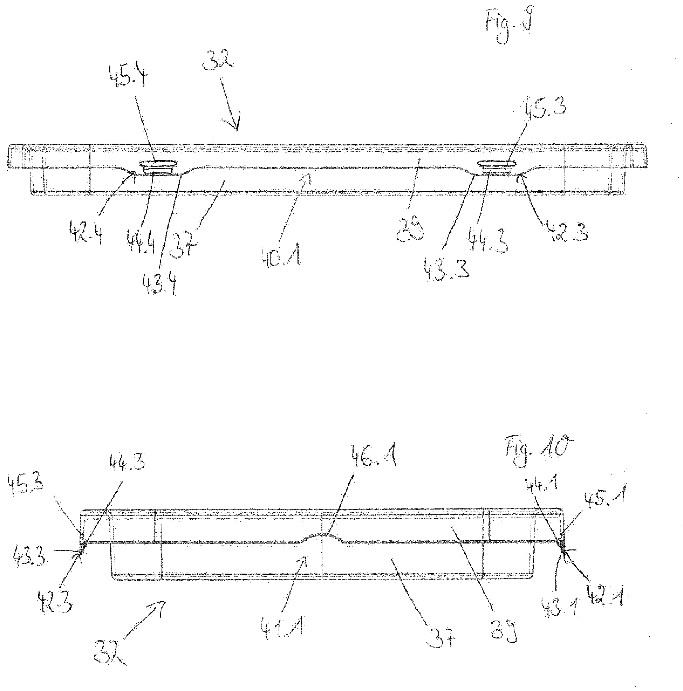

In der Figur 9 ist eine durchsichtige Seitenansicht des Deckels 32 auf die erste Längsseite 40.1 und in Figur 10 ist eine weitere durchsichtige Seitenansicht des Deckels 32 auf die erste Querseite 41.1 dargestellt. Dabei sind die weiteren Deckelarretierungen 42.1 und 42.3 noch einmal in einer frontalen und einer seitlichen Ansicht dargestellt, wobei die Überhangverlängerung 43.1, 43.2, 43.3, 43.4 als partielle Ausbuchtung des Deckelüberhangs 39 in die von der Deckelauflage 38 weg gerichtete Richtung ersichtlich sind.

Weiterhin ist die Clipskante 44.1, 44.2, 44.3, 44.4 als parallel zu der Deckelauflage 38 verlaufende keilförmige Ausweitung des Deckelüberhangs 39 im Bereich der Überhangverlängerung 43.1, 43.2, 43.3, 43.4 auf der Seite, die in Richtung der Innenwand 37 gerichtet ist, ersichtlich.

Zudem ist noch einmal der Biegebereich 45.1, 45.2, 45.3, 45.4 dargestellt, welcher ein Bereich des Deckelüberhangs 39 ist, der unmittelbar an die Clipskante 44.1, 44.2, 44.3, 44.4 auf der Seite die in Richtung der Deckelauflage gerichtet ist anschließt. Bei dem Biegebereich 45.1, 45.2, 45.3, 45.4. ist eine Wandstärke W des Deckelüberhangs 39 um ein Drittel bis zu einer Hälfte verringert, was insbesondre noch einmal in Figur 10 ersichtlich ist.

Weiterhin weist der Deckel 32 an seiner ersten Querseite 41.1, sowie gegenüber an seiner zweiten Querseite 41.2 an dem Deckelüberhang 39, jeweils mittig angeordnet, eine Tragegriffaufnahmeaussparung 46.1, 46.2 auf. Die Tragegriffaufnahmeaussparung 46.1, 46.2 ist eine teilkreisförmige Ausnehmung aus dem Deckelüberhang 39. Diese Tragegriffaufnahmeaussparung 46.1, 46.2 ist aufgrund der ersten Tragegriffaufnahme 21. und der gegenüberliegenden zweiten Tragegriffaufnahme 27 des Wascheimers 1 notwendig, um den Deckel 32 ordnungsgemäß auf dem Wascheimer 1 aufsetzen und in den Bohrungen verclipsen zu können.

In diesem Zusammenhang wird nochmals darauf hingewiesen, dass die Clipskanten 44.1, 44.2, 44.3, 44.4 der weiteren Deckelarretierungen 42.1, 42.2, 42.3, 42.4 des Deckels 32 hinter die Clipsleisten 19 der Deckelarretierungen 18.1, 18.2 am langen Überhang 17 des Eimerrands 5 oder hinter das Ende des kurzen Überhangs 16 des Eimerrands 5 einrastbar und oder einclipsbar sind.

Dabei ist insbesondere zu berücksichtigen, dass die Innenwand 37 zu der Deckelauflage 38 in einem nach aussen ragenden Winkel von 92 bis 95 Grad verläuft und wobei der Deckelüberhang 39 zu der Deckelauflage 38 in einem Winkel von 91 bis 94 Grad angeordnet ist und wobei der Deckelüberhang 39 halb so lang wie die Innenwand 37 ist, wobei die Länge der Innenwand 37 dem Abstand zwischen der Deckelauflage 38 und der Deckelplatte 34 entspricht.

Dies wiederum hängt damit zusammen, dass der Deckel 32 an einer ersten Querseite 41.1 und gegenüber an seiner zweiten Querseite 41.2 an mittiger Position des Deckelüberhangs 39, eine Tragegriffaufnahmeaussparung 46.1, 46.2 aufweist.

Insgesamt ist zu beachten, dass die Waschsiebauflage 12 an der jeweiligen Aussenseite der ersten langen Wandung 3.1, der zweiten langen Wandung 3.2 sowie der zweiten kurzen Wandung 4.2 eine Kante 13 ausbildet.

Obwohl nur ein bevorzugtes Ausführungsbeispiel des erfindungsgemäßen Wascheimers 1 beschrieben und dargestellt wurde, ist es offensichtlich, dass der Fachmann zahlreiche Modifikationen hinzufügen kann, ohne Wesen und Umfang der Erfindung zu verlassen. Diese Modifikationen betreffen insbesondre die genauen Ausformungsmaße.

### Bezugszeichenliste

| | | | |
|---|---|---|---|
| 1 | Wascheimer | 34 | Deckelplatte |
| 2 | Boden | 35 | Deckelrand |
| 3.1, 3.2 | erste lange Wandung | 36 | Deckelinnenseite |
| | zweite lange Wandung | | |
| 4.1 | erste kurze Wandung | 37 | Innenwand |
| 4.2 | zweite kurze Wandung | | |
| 5 | Eimerrand | 38 | Deckelauflage |
| 6 | lichte Fläche | 39 | Deckelüberhang |
| 7 | Waschsieb | 40.1 | erste Längsseite, |
| | | 40.2 | zweite Längsseite |
| 8 | Gitterstruktur | 41.1 | erste Querseite |
| | | 41.2 | zweite Querseite |
| 9 | Standbeine | 42 | weitere Deckelarretierung |
| 10 | gewölbte Seite | 43.1 - 43.4 | Überhangverlängerung |
| 11 | Gitteröffnung | 44.1 - 44.4 | Clipskante |
| 12 | Waschsiebaufnahme | 45.1 - 45.4 | Biegebereich |
| 13 | Kante | 46 | Tragegriffaufnahmeaussparung |
| 14.1-14-6 | Haltelippe | 47 | Lamelle |
| 15 | Sattelbereich | 48 | Anschlagslamelle |
| 16 | kurzer Überhang | 49 | Anstoßrippe |
| 17 | langer Überhang | | |
| 18.1, 18.2 | Deckelarretierung | | |
| 19 | Clipsleiste | | |
| 20 | Handgriff | | |
| 21 | erste Tragegriffaufnahme | | |
| 22.1 - 22.4 | Begrenzungselement | | |
| 23.1 - 23.6 | Bohrung | | |
| 24.1 - 24.6 | Lagerschlitz | | |
| 25 | Rundkante | | |
| 26.1 - 26.4 | Radaufnahme | | |
| 27 | zweite Tragegriffaufnahme | | |
| 28 | Verbreiterung | A | Schnittlinie |
| 29 | Eimerrandwandung | B | Standfläche |
| 30.1 - 30.4 | Kontaktbereich | W | Wandstärke |
| 31.1 | erster Anschlagsbereich | H1 | erste Hilfslinie |
| 31.2 | zweiter Anschlagsbereich | | |
| 32 | Deckel | H2 | zweite Hilfslinie |
| 33 | Deckelaußenseite | | |

## Patentansprüche

1. Wascheimer (1) mit einem Boden (2), wobei eine erste lange Wandung (3.1), eine zweite lange Wandung (3.2), eine erste kurze Wandung (4.1) und eine zweite kurze Wandung (4.2) einen Eimerrand (5) aufweisen,
**dadurch gekennzeichnet,**
**dass** der Eimerrand (5) U-förmig ist und einen kurzen Überhang (16) und einen langen Überhang (17) ausbildet, wobei der lange Überhang (17) eine Deckelarretierung (18.1, 18.2) mit einer Clipsleiste (19) ausbildet, wobei die Clipsleiste (19) leistenförmig parallel zu der lichten Fläche (6) verläuft und über die Einbuchtung der Deckelarretierung (18.1, 18.2) und teilt die Deckelarretierung (18.1, 18.2) in einen oberen und einen unteren Bereich, wobei die Clipsleiste (19) die Einbuchtung der Deckelarretierung (18.1, 18.2) überbrückt, wobei die Clipsleiste (19) auf der gleichen Ebene wie der lange Überhang (17) liegt.

2. Wascheimer (1) nach Anspruch 1 **dadurch gekennzeichnet, dass** die erste lange Wandung (3.1), die zweite lange Wandung (3.2) sowie die zweite kurze Wandung (4.2) an ihrer Innenseite eine Waschsiebauflage (12) mit Haltelippen (14.1, 14.2, 14.3, 14.4) für die Aufnahme eines Waschsiebs (7) ausbilden.

3. Wascheimer (1) nach Anspruch 1 **dadurch gekennzeichnet, dass** ein Sattelbereich (15) des Eimerrandes (5) Lagerschlitze (24.1, 24.2, 24.3, 24.4) aufweist, wobei jeder Lagerschlitz (24.1, 24.2, 24.3, 24.4) mit einer Bohrung (23.1, 23.2, 23.3, 23.4) in Verbindung steht.

4. Wascheimer (1) nach Anspruch 1 **dadurch gekennzeichnet, dass** zwischen dem Boden (2) und der ersten langen Wandung (3.1) und der zweiten langen Wandung (3.2) und der ersten kurzen Wandung (4.1) und der zweiten kurzen Wandung (4.2) eine Rundkante (25) angeordnet ist.

5. Wascheimer (1) nach Anspruch 1 **dadurch gekennzeichnet, dass** der Boden (2) an seiner Aussenseite vier Kontaktbereiche (30.1, 30.2, 30.3, 30.4) ausbildet.

6. Wascheimer (1) nach Anspruch 4 und 5 **dadurch gekennzeichnet, dass** die Rundkante (25) an ihrer Aussenseite im Bereich der vier Kontaktbereiche (30.1, 30.2, 30.3, 30.4) Anstoßrippen (49) aufweist.

7. Wascheimer (1) nach Anspruch 1 **dadurch gekennzeichnet, dass** der Boden (2) an seiner Innenseite einen ersten Anschlagsbereich (31.1) und einen zweiten Anschlagsbereich (31.2) in Form einer in Richtung einer lichten Fläche (6) reichenden Auswölbung ausbildet.

8. Wascheimer (1) nach Anspruch 1 **dadurch gekennzeichnet, dass** der Boden (2) Radaufnahmen (26.1, 26.2, 26.3, 26.4) aufweist.

9. Wascheimer (1) nach Anspruch 1 **dadurch gekennzeichnet, dass** der lange Überstand (17) des Eimerrands (5) auf der Seite der ersten kurzen Wandung (4.1) einen Handgriff (20) ausbildet.

10. Wascheimer (1) nach mindestens einem der vorherigen Ansprüche **dadurch gekennzeichnet, dass** der Handgriff (20) eine erste Tragegriffaufnahme (21) und der kurze Überstand (16) eine Verbreiterung (28) mit einer zweiten Tragegriffaufnahme (27) aufweist, wobei die erste Tragegriffaufnahme (21) und die zweite Tragegriffaufnahme (27) auf einer horizontalen Linie liegen, welche parallel zu einer lichten Fläche (6) verläuft.

11. Wascheimer (1) nach mindestens einem der vorherigen Ansprüche **dadurch gekennzeichnet, dass** der Boden (2) an seiner Aussenseite Lamellen (47) aufweist, die sich in Längsrichtung zwischen der ersten kurzen Wandung (4.1) und der zweiten kurzen Wandung (4.2) erstrecken.

12. Wascheimer (1) nach mindestens einem der vorherigen Ansprüche **dadurch gekennzeichnet, dass** leistenförmige Begrenzungselemente (22.1, 22.1, 22.3, 22.4) sowohl mit der Innenseite des langen Überhangs (17) und der Innenseite des Handgriffs (20) als auch mit den kurzen Wandungen (4.1, 4.2) verbunden sind und an der Aussenseite der ersten bzw. zweite kurzen Wandung (4.1, 4.2) in Richtung des Bodens 2 verlaufen, wobei sie ein freies Ende ausbilden.

13. Wascheimer (1) nach Anspruch 1 **dadurch gekennzeichnet, dass** auf dem Eimerrand (5) des Wascheimers (1) ein Deckel (32) anordenbar ist.

14. Wascheimer (1) nach Anspruch 13 **dadurch gekennzeichnet, dass** der Deckelrand (35) des Deckels (32) J-förmig ist und eine Innenwand (37) aufweist die mit einer Deckelplatte (34) verbunden ist und andererseits in eine Deckelauflage (38) übergeht, wobei die Deckelauflage (38) ihrerseits in einen Deckelüberhang (39) übergeht.

15. Wascheimer (1) nach Anspruch 14 **dadurch gekennzeichnet, dass** der Deckelrand (35) des Deckels (32) an dem Deckelüberhang (39) weitere Deckelarretierungen (42.1, 42.2, 42.3, 42.4) aufweist, wobei die Deckelarretierungen (42.1, 42.2, 42.3, 42.4) eine Überhangverlängerung (43.1, 43.2, 43.3, 43.4), eine Clipskante (44.1, 44.2, 44.3, 44.4) und einen Biegebereich (45.1, 45.2, 45.3, 45.4) aufweisen.

## Claims

1. Washing bucket (1) with a base (2), wherein a first long wall (3.1), a second long wall (3.2), a first short wall (4.1) and a second short wall (4.2) have a bucket rim (5),
**characterized in that**
the bucket rim (5) is U-shaped and forms a short overhang (16) and a long overhang (17), the long overhang (17) forming a lid lock (18.1, 18.2) with a clip strip (19), the clip strip (19) running in a strip-like manner parallel to the clear surface (6) and extending over the recess of the lid lock (18.1, 18.2) and dividing the lid lock (18.1, 18.2) into an upper and a lower region, the clip strip (19) bridging the recess of the lid lock (18.1, 18.2), the clip strip (19) lying on the same plane as the long overhang (17).

2. Washing bucket (1) according to claim 1, **characterized in that** the first long wall (3.1), the second long wall (3.2) and the second short wall (4.2) form a washing sieve support (12) with retaining lips (14.1, 14.2, 14.3, 14.4) on their inner side for receiving a washing sieve (7).

3. Washing bucket (1) according to claim 1, **characterized in that** a saddle region (15) of the rim of the bucket (5) has bearing slots (24.1, 24.2, 24.3, 24.4), each bearing slot (24.1, 24.2, 24.3, 24.4) being connected to a bore (23.1, 23.2, 23.3, 23.4).

4. Washing bucket (1) according to claim 1, **characterized in that** a round edge (25) is arranged between the base (2) and the first long wall (3.1) and the second long wall (3.2) and the first short wall (4.1) and the second short wall (4.2).

5. Washing bucket (1) according to claim 1, **characterized in that** the base (2) forms four contact areas (30.1, 30.2, 30.3, 30.4) on its outer side.

6. Washing bucket (1) according to claims 4 and 5, **characterized in that** the round edge (25) has abutment ribs (49) on its outer side in the region of the four contact areas (30.1, 30.2, 30.3, 30.4).

7. Washing bucket (1) according to claim 1, **characterized in that** the base (2) forms a first stop region (31.1) and a second stop region (31.2) on its inner side in the form of a bulge extending in the direction of a clear surface (6).

8. Washing bucket (1) according to claim 1, **characterized in that** the base (2) includes wheel receptacles (26.1, 26.2, 26.3, 26.4).

9. Washing bucket (1) according to claim 1, **characterized in that** the long overhang (17) of the bucket rim (5) forms a handle (20) on the side of the first short wall (4.1).

10. Washing bucket (1) according to at least one of the preceding claims, **characterized in that** the handle (20) has a first carrying handle receptacle (21) and the short overhang (16) has a widening (28) with a second carrying handle receptacle (27), wherein the first carrying handle receptacle (21) and the second carrying handle receptacle (27) lie on a horizontal line which runs parallel to a clear surface (6).

11. Washing bucket (1) according to at least one of the preceding claims, **characterized in that** the base (2) has slats (47) on its outer side, which extend in the lengthwise direction between the first short wall (4.1) and the second short wall (4.2).

12. Washing bucket (1) according to at least one of the preceding claims, **characterized in that** strip-shaped limiting elements (22.1, 22.1, 22.3, 22.4) are connected both to the inside of the long overhang (17) and the inside of the handle (20) and to the short walls (4.1, 4.2) and extend on the outside of the first and second short walls (4.1, 4.2), respectively, in the direction of the base (2), forming a free end.

13. Washing bucket (1) according to claim 1, **characterized in that** a lid (32) can be arranged on the bucket rim (5) of the washing bucket (1).

14. Washing bucket (1) according to claim 13, **characterized in that** the lid edge (35) of the lid (32) is J-shaped and has an inner wall (37) which is connected to a lid plate (34) and, on the other hand, merges into a lid support (38), the lid support (38) on the inside merging into a lid overhang (39).

15. Washing bucket (1) according to claim 14, **characterized in that** the lid edge (35) of the lid (32) has further lid locks (42.1, 42.2, 42.3, 42.4) on the lid overhang (39), the lid locks (42.1, 42.2, 42.3, 42.4) having an overhang extension (43.1, 43.2, 43.3, 43.4). 4), a clip edge (44.1, 44.2, 44.3, 44.4) and a bending area (45.1, 45.2, 45.3, 45.4).

## Revendications

1. Seau de lavage (1) comportant un fond (2), dans lequel une première paroi longue (3.1), une seconde paroi longue (3.2), une première paroi courte (4.1) et une seconde paroi courte (4.2) présentent un bord de seau (5),
**caractérisé en ce**
**que** le bord de seau (5) est en forme de U et forme une courte saillie (16) et une longue saillie (17), dans lequel la longue saillie (17) forme un élément de blocage de couvercle (18.1, 18.2) comportant une baguette à agrafe (19), dans lequel la baguette à agrafe (19) s'étend en forme de baguette parallèlement à la surface libre (6) et au-dessus de la cavité de l'élément de blocage de couvercle (18.1, 18.2) et divise l'élément de blocage de couvercle (18.1, 18.2) en une zone supérieure et en une zone inférieure, dans lequel la baguette à agrafe (19) recouvre la cavité de l'élément de blocage de couvercle (18.1, 18.2), dans lequel la baguette à agrafe (19) se situe sur le même plan que la longue saillie (17).

2. Seau de lavage (1) selon la revendication 1, **caractérisé en ce que** la première paroi longue (3.1), la seconde paroi longue (3.2) ainsi que la seconde paroi courte (4.2) forment sur leur face intérieure un support pour tamis de lavage (12) comportant des lèvres de retenue (14.1, 14.2, 14.3, 14.4) pour la réception d'un tamis de lavage (7).

3. Seau de lavage (1) selon la revendication 1, **caractérisé en ce qu'**une zone formant collerette (15) du bord de seau (5) présente des fentes formant paliers (24.1, 24.2, 24.3, 24.4), dans lequel chaque fente formant palier (24.1, 24.2, 24.3, 24.4) est en liaison avec un alésage (23.1, 23.2, 23.3, 23.4).

4. Seau de lavage (1) selon la revendication 1, **caractérisé en ce qu'**un bord arrondi (25) est disposé entre le fond (2) et la première paroi longue (3.1) et la seconde paroi longue (3.2) et la première paroi courte (4.1) et la seconde paroi courte (4.2).

5. Seau de lavage (1) selon la revendication 1, **caractérisé en ce que** le fond (2) forme, sur sa face extérieure, quatre zones de contact (30,1, 30,2, 30,3, 30,4).

6. Seau de lavage (1) selon les revendications 4 et 5, **caractérisé en ce que** le bord arrondi (25) présente, sur sa face extérieure, des nervures anti-choc (49) dans la zone des quatre zones de contact (30.1, 30.2, 30.3, 30.4).

7. Seau de lavage (1) selon la revendication 1, **caractérisé en ce que** le fond (2) forme, sur sa face intérieure, une première zone formant butée (31.1) et une seconde zone formant butée (31.2) sous la forme d'une convexité s'étendant en direction d'une surface libre (6).

8. Seau de lavage (1) selon la revendication 1, **caractérisé en ce que** le fond (2) présente des réceptacles pour roues (26,1, 26,2, 26,3, 26,4).

9. Seau de lavage (1) selon la revendication 1, **caractérisé en ce que** la longue protubérance (17) du bord de seau (5) forme une poignée (20) sur la face de la première paroi courte (4.1).

10. Seau de lavage (1) selon au moins l'une des revendications précédentes, **caractérisé en ce que** la poignée (20) présente un premier réceptacle pour poignée de transport (21) et la courte protubérance (16) présente un élargissement (28) comportant un second réceptacle pour poignée de transport (27), dans lequel le premier réceptacle pour poignée de transport (21) et le second réceptacle pour poignée de transport (27) sont situés sur une ligne horizontale qui s'étend parallèlement à une surface libre (6).

11. Seau de lavage (1) selon au moins l'une des revendications précédentes, **caractérisé en ce que** le fond (2) présente, sur sa face extérieure, des lamelles (47) qui s'étendent dans la direction longitudinale entre la première paroi courte (4.1) et la seconde paroi courte (4.2).

12. Seau de lavage (1) selon au moins l'une des revendications précédentes, **caractérisé en ce que** des éléments de délimitation (22.1, 22.1, 22.3, 22.4) en forme de baguette sont reliés aussi bien à la face intérieure de la longue protubérance (17) et à la face intérieure de la poignée (20) qu'aux parois courtes (4.1, 4.2) et s'étendent sur la face extérieure de la première ou de la seconde paroi courte (4.1, 4.2) en direction du fond (2), dans lequel lesdits éléments de délimitation forment une extrémité libre.

13. Seau de lavage (1) selon la revendication 1, **caractérisé en ce qu'**un couvercle (32) peut être disposé sur le bord de seau (5) du seau de lavage (1).

14. Seau de lavage (1) selon la revendication 13, **caractérisé en ce que** le bord de couvercle (35) du couvercle (32) est en forme de J et présente une paroi intérieure (37) qui est reliée à une plaque de couvercle (34) et se prolonge d'autre part en un support de couvercle (38), dans lequel le support de couvercle (38) se prolonge de son côté en une saillie de couvercle (39).

15. Seau de lavage (1) selon la revendication 14, **caractérisé en ce que** le bord de couvercle (35) du couvercle (32) présente, sur la saillie de couvercle (39), d'autres éléments de blocage de couvercle (42.1, 42.2, 42.3, 42.4), dans lequel les éléments de blocage de couvercle (42.1, 42.2, 42.3, 42.4) présentent un allongement de saillie (43.1, 43.2, 43.3, 43.4), une arête à agrafe (44.1, 44.2, 44.3, 44.4) et une zone de pliage (45.1, 45.2, 45.3, 45.4).
